# EUROPÄISCHE PATENTSCHRIFT

(11) **EP 2 121 285 B1**
(45) Veröffentlichungstag und Bekanntmachung des Hinweises auf die Patenterteilung: **10.07.2013**
(21) Anmeldenummer: 07857289.8
(22) Anmeldetag: 07.12.2007
(51) Int. Cl.: B29C 65/16

(54) **LASERSCHWEISSVERFAHREN**
LASER WELDING METHOD
PROCÉDÉ DE SOUDAGE AU LASER

(30) Priorität: 08.12.2006 US 869193 P; 20.04.2007 US 913014 P
(43) Veröffentlichungstag der Anmeldung: 25.11.2009
(73) Patentinhaber: MAHLE International GmbH, 70376 Stuttgart (DE)
(72) Erfinder: DALY, Paul Desmond, Troy, Michigan 48084 (US); WHITENTON BAYLIS, Bobbye Kaye, Harrow, Ontario N0R 1G0 (CA)
(74) Vertreter: BRP Renaud & Partner
(86) Internationale Anmeldenummer: PCT/EP2007/063511
(87) Internationale Veröffentlichungsnummer: WO 2008/068328

(56) Entgegenhaltungen:
- EP-A- 0 483 569
- DE-A1- 4 409 255
- DE-A1- 10 109 594
- US-B1- 6 592 239

## Beschreibung

Die vorliegende Erfindung betrifft ein Verfahren nach Anspruch 1.

Bei einer Vielzahl unterschiedlichster Anwendungen kann es erforderlich sein, zwei Kunststoffbauteile miteinander zu verschweißen, vgl. z.B. US 659 2 239. Beispielsweise können zwei Gehäuseteile miteinander verschweißt werden. Bei der Herstellung von Kunststoff-Wärmeübertragern, die beispielsweise zur Kühlung von Ladeluft bei einer aufgeladenen Brennkraftmaschine zum Einsatz kommen können, kann es erforderlich sein, eine Vielzahl einzelner Rohre an ihren Enden jeweils mit einer Tragplatte zu verschweißen. Hierbei müssen auf engstem Raum eine Vielzahl von Schweißverbindungen realisiert werden, die außerdem relativ dicht sein müssen.

Aus der WO 2007/065271 A1 ist es für einen Wärmeübertrager bekannt, Kunststoffrohre mit einem radial abstehenden Flansch zu versehen, der an einer Tragplatte flächig zur Anlage kommt. Die Kunststoffrohre besitzen zumindest im Bereich des Flansches für einen beim Laserschweißen verwendeten Laserstrahl eine vergleichsweise hohe Durchlässigkeit. Im Unterschied dazu besitzt die Tragplatte für den Laserstrahl eine relativ niedrige Durchlässigkeit. Der Laserstrahl kann nun senkrecht zur Tragplatte durch den Flansch durchtreten und wird erst im Material der Tragplatte absorbiert, wodurch sich an der Grenzfläche zwischen Tragplatte und Flansch die gewünschte Schweißstelle ausbilden kann. Zur Realisierung des bekannten Verfahrens ist vergleichsweise viel Bauraum erforderlich, da der Flansch einen deutlich größeren Durchmesser aufweist als das jeweilige Rohr.

Aus der US 5,749,414 ist ein Verfahren zum Laserschweißen von zwei Aluminiumteilen bekannt. Hierzu wird bei einem Wärmeübertrager jeweils ein Rohr in eine Tragplatte eingesteckt, bis das Rohr mit der Tragplatte bündig abschließt. Dann kann mit Hilfe eines Laserstrahls das stirnseitige Ende des Rohrs mit der Platte verschweißt werden.

Die vorliegende Erfindung beschäftigt sich mit dem Problem, für ein Verfahren der eingangs genannten Art eine verbesserte Ausführungsform anzugeben, die sich insbesondere dadurch auszeichnet, dass sie mit vergleichsweise wenig Platz auskommt, wodurch für einen Wärmeübertrager eine kompakte Bauweise realisierbar ist.

Dieses Problem wird erfindungsgemäß durch das Verfahren des unabhängigen Anspruchs 1 gelöst. Vorteilhafte Ausführungsformen sind Gegenstand der abhängigen Ansprüche.

Die Erfindung beruht auf dem allgemeinen Gedanken, den Laserstrahl während des Schweißvorgangs mittels Brechung und/oder Reflexion zur jeweiligen Schweißstelle umzulenken. Bei dieser Vorgehensweise lassen sich auch Schweißstellen mit dem Laserstrahl erreichen, die mit dem Laserstrahl auf direktem Wege, beispielsweise aufgrund vorgegebener Bauraumsituationen nicht erreichbar sind. Die Erfindung ermöglicht somit die Durchführung von Schweißvorgängen, die bei herkömmlichen Schweißverfahren mit geradliniger, direkter Beaufschlagung durch den Laserstrahl nicht realisierbar sind.

Besonders vorteilhaft ist dabei eine Ausführungsform, bei der das für den Laserstrahl durchlässige Bauteil zumindest eine Reflektorfläche aufweist, die den Laserstrahl durch Reflexion zur jeweiligen Schweißstelle umlenkt. Dabei kann die Reflektorfläche am jeweiligen Bauteil so angeordnet sein, dass sie den von außen auf die Reflektorfläche auftreffenden Laserstrahl durch einen Bereich des Bauteils hindurch zur jeweiligen Schweißstelle führt. Alternativ kann die jeweilige Reflektorfläche auch so ausgestaltet sein, dass der Laserstrahl von innen auf die Reflektorfläche trifft und dann innerhalb des Bauteils zur jeweiligen Schweißstelle gelangt. Die Reflektorfläche bildet somit einen integralen Bestandteil des jeweiligen Bauteils. Eine derartige Reflektorfläche kann beispielsweise mit Totalreflexion arbeiten, so dass die Reflexion des Laserstrahls über den jeweiligen Einfallswinkel einstellbar ist. Zusätzlich kann die jeweilige Reflexionsfläche verspiegelt sein. Beispielsweise kann das jeweilige Bauteil zumindest im Bereich der jeweiligen Reflektorfläche mit einem geeigneten Metall bedampft sein oder galvanisiert sein.

Bei einer anderen Ausführungsform kann das für den Laserstrahl durchlässige Bauteil mit wenigstens einer Brechungsfläche ausgestaltet sein, so dass der von außen auf die Brechungsfläche auftreffende Laserstrahl an der Brechungsfläche in das jeweilige Bauteil eintritt und dann innerhalb des Bauteils zur jeweiligen Schweißstelle gelangt. Somit kann durch eine geeignete Abstimmung des Einstrahlwinkels der Laserstrahl zur gewünschten Schweißstelle geführt werden.

Bei einer alternativen Ausführungsform wird das der Erfindung zugrunde liegende Problem dadurch gelöst, dass beide Bauteile für den Laserstrahl eine absorbierende Wirkung aufweisen, insbesondere eine halbabsorbierende Wirkung. Die beiden Bauteile werden relativ zueinander so positioniert, dass zwischen den Bauteilen ein Spalt mit einer vorbestimmten Spaltweite vorliegt. Der Laserstrahl kann nun parallel zu einer quer zur Spaltweite verlaufenden Spalterstreckung in den Spalt eingestrahlt werden. Die Dimensionierung des Spalts ist dabei so gewählt und auf den jeweiligen Laser-strahl so abgestimmt, dass sich die im Spalt gegenüberliegenden Wandabschnitte der beiden Bauteile aufgrund ihrer halbabsorbierenden Eigenschaft so weit aufheizen, dass sie aufschmelzen und miteinander verschmelzen, wodurch sich der Spalt schließt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Querschnitt durch zwei Bauteile in einem Bereich, in dem eine Schweißverbindung hergestellt werden soll,
- Fig. 2: eine Ansicht wie in Fig. 1, jedoch bei einer anderen Ausführungsform,
- Fig. 3: eine perspektivische Ansicht der Ausführungsform gemäß Fig. 2,
- Fig. 4: eine weitere Schnittansicht wie in Fig. 1, jedoch bei einer anderen Ausführungsform,
- Fig. 5: eine Draufsicht auf ein Bauteil, das mittels Schweißverbindungen mit mehreren Bauteilen verbunden werden soll,
- Fig. 6: eine Draufsicht auf einen Reflektor,
- Fig. 7: eine Schnittansicht durch die Bauteile im Bereich eines Reflektors,
- Fig. 8: eine Draufsicht wie in Fig. 5, jedoch bei einer anderen Ausführungsform,
- Fig. 9: eine vergrößerte Draufsicht auf einen Reflektor,
- Fig. 10: eine Draufsicht wie in Fig. 8, jedoch bei einer anderen Ausführungsform,
- Fig. 11: eine Schnittansicht wie in Fig. 1, jedoch bei einer anderen Ausführungsform,
- Fig. 12: eine Ansicht wie in Fig. 11, jedoch bei einer weiteren Ausführungsform,
- Fig. 13: eine Ansicht wie in Fig. 1, jedoch bei einer weiteren Ausführungsform,
- Fig. 14: eine Ansicht wie in Fig. 1, jedoch bei einer alternativen Ausführungsform.

Das nachfolgend beschriebene Verfahren zum Laserschweißen lässt sich grundsätzlich zum Verbinden zweier beliebiger Kunststoffteile verwenden. Der Gegenstand der vorliegenden Erfindung betrifft jedoch die Herstellung von Kunststoff-Wärmeübertragern, die beispielsweise als Ladeluftkühler zur Anwendung kommen können. Dementsprechend handelt es sich bei dem einen Bauteil um ein Rohr aus Kunststoff, während es sich beim anderen Bauteil um eine Tragplatte aus Kunststoff handelt. Üblicherweise werden eine Vielzahl derartiger Rohre mit Hilfe des Laserschweißverfahrens an wenigstens einem ihrer Enden mit einer solchen Tragplatte fest verbunden.

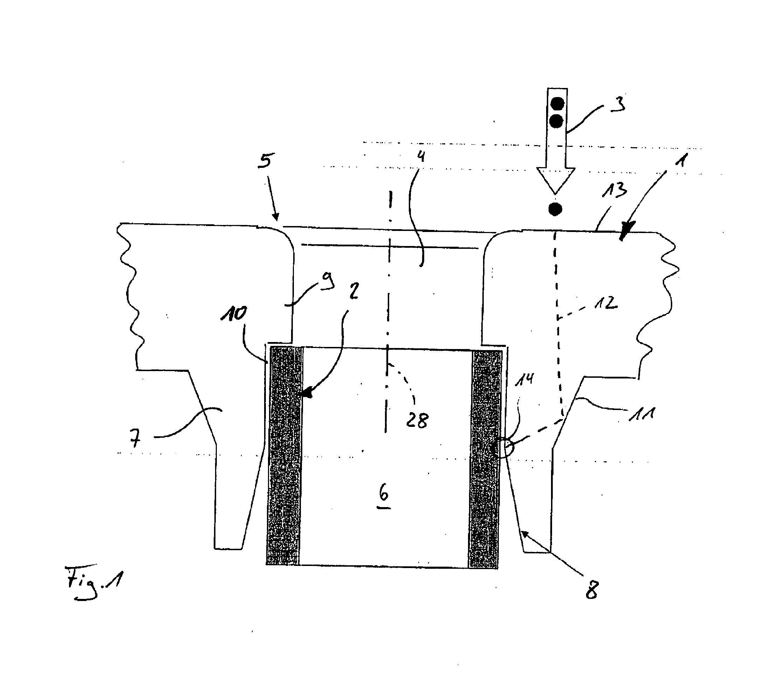

Entsprechend Fig. 1 lassen sich mit Hilfe des Laserschweißverfahrens somit ein erstes Bauteil 1 und ein zweites Bauteil 2 fest miteinander verbinden. Beim ersten Bauteil 1 handelt es sich um eine Tragplatte 1, während es sich beim zweiten Bauteil 2 um ein Rohr 2 handelt. Beide Bauteile 1, 2 sind dabei aus Kunststoff hergestellt. Der Kunststoff der Tragplatte 1 ist bevorzugt so gewählt, dass sie für einen Laserstrahl 3, der beim Laserschweißen verwendet wird und der hier symbolisch durch einen Pfeil angedeutet ist, eine vergleichsweise hohe Durchlässigkeit aufweist. Grundsätzlich kann die Tragplatte 1 für den Laserstrahl 3 durchlässig oder transparent ausgestaltet sein. Im Unterschied dazu besitzt das Rohr 2 für den Laserstrahl 3 eine relativ niedrige Durchlässigkeit, insbesondere ist das Rohr 2 für den Laserstrahl 3 absorbierend ausgestaltet. Dies kann bei Kunststoff beispielsweise dadurch erreicht werden, dass die Kunststoffmasse, insbesondere mit Kohlenstoffpartikeln, eingeschwärzt wird. Die Durchlässigkeit für den Laserstrahl 3 ist an der Tragplatte 1 jedenfalls größer als beim Rohr 2, zumindest bei den Ausführungsformen der Fig. 1 bis 12.

Erfindungsgemäß gelangt der Laserstrahl 3 beim Laserschweißen nun nicht direkt zur jeweiligen Schweißstelle, sondern durch Brechung bzw. Reflexion. Hierdurch ergeben sich Vorteile hinsichtlich des Bauraumbedarfs.

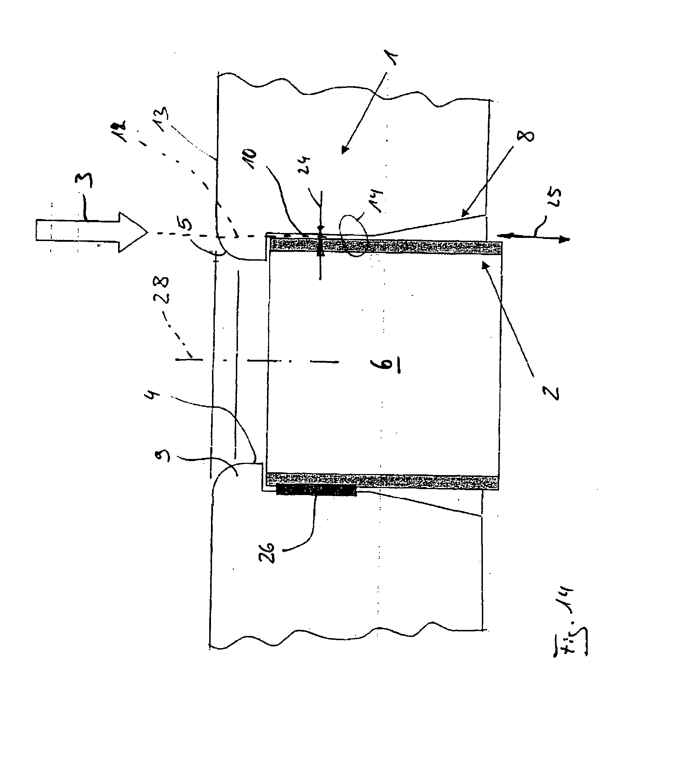

Fig. 1 zeigt konkret eine in die Tragplatte 1 eingearbeitete Durchgangsöffnung 4 mit einem abgerundeten Übergangsbereich 5. Die Durchgangsöffnung 4 kommuniziert mit einem Inneren 6 des Rohrs 2. Das Rohr 2 ist axial in eine Rohraufnahme 7 eingesteckt, die zur Vereinfachung des Einsteckvorgangs mit einer Einführschräge 8 versehen sein kann. Die Tragplatte 1 besitzt im Bereich der Durchgangsöffnung 4 einen Bund 9, der radial nach innen vorsteht und an dem das Rohr 2 im eingesteckten Zustand axial zur Anlage kommt. Radial zwischen dem Rohr 2 und der Aufnahme 7 ist ein Ringspalt 10 erkennbar, der jedoch toleranzbedingt schwanken kann. Im Bereich dieses Ringspalts 10 soll eine ringförmig geschlossen umlaufende Schweißverbindung zwischen dem Rohr 2 und der Tragplatte 1 hergestellt werden. Abgesehen von der mit Bezug auf Fig. 14 vorgestellten Ausführungsform ist der Ringspalt 10 nicht erforderlich. Ein Presssitz des Rohrs 2 in der Aufnahme 7 wird bevorzugt, lässt sich toleranzbedingt jedoch nicht immer erzielen. Die Darstellungen sind daher nicht maßstäblich zu verstehen.

Die Tragplatte 1 weist zu diesem Zweck zumindest eine Reflektorfläche 11 auf. Diese ist durch einen entsprechend gestalteten Bereich der Außenkontur der Tragplatte 1, hier im Bereich der Aufnahme 7 gebildet. Der Laserstrahl 3 kann entsprechend einer unterbrochenen Linie, die einen Strahlverlauf 12 repräsentiert, zunächst parallel zur Längsrichtung des Rohrs 2 auf eine vom Rohr 2 abgewandte Außenseite 13 der Tragplatte 1 auftreffen. Aufgrund der Transparenz der Tragplatte 1 kann sich der Laserstrahl 3 zunächst in der Tragplatte 1 ausbreiten, bis er auf die Reflektorfläche 11 trifft. Diese ist durch den Medienübergang zwischen dem Werkstoff Tragplatte 1 und der Umgebung, in der Regel Luft, gebildet und kann beispielsweise mit Totalreflexion arbeiten. Die Reflektorfläche 11 ist dementsprechend bezüglich der Ausbreitungsrichtung des Laserstrahls 3 mit einer bestimmten Neigung versehen, die so gewählt ist, dass beim Auftreffen des Laserstrahls 3 an der Reflektorfläche 11 Totalreflexion des Laserstrahls 3 erfolgt, so dass dieser in Richtung des Rohrs 2 umgelenkt wird. Dort gelangt der Laserstrahl 3 zur jeweiligen Schweißstelle, die hier durch einen Kreis angedeutet ist und mit 14 bezeichnet ist. Im Bereich dieser Schweißstelle 14 trifft der Laserstrahl 3 dann auf das absorbierende Material des Rohrs 2, wodurch die Wärme zum Aufschmelzen des Kunststoff des Rohrs 2 und des Kunststoffs der Platte 1 freigesetzt wird. Der Laserstrahl 3 wird entsprechend dem rotationssymmetrischen Verlauf des Rohrs 2 um dessen Längsmittelachse 28 rotierend herumgeführt, bis eine unterbrechungsfreie Schweißnaht vorliegt. Dementsprechend ist die Reflektorfläche 11 bezüglich der Längsmittelachse 28 des Rohrs 2 ebenfalls rotationssymmetrisch ausgebildet.

Bei der in Fig. 1 gezeigten Ausführungsform trifft der Laserstrahl 3 somit von innen auf die Reflektorfläche 11 und gelangt innerhalb der Tragplatte 1 zur jeweiligen Schweißstelle 14.

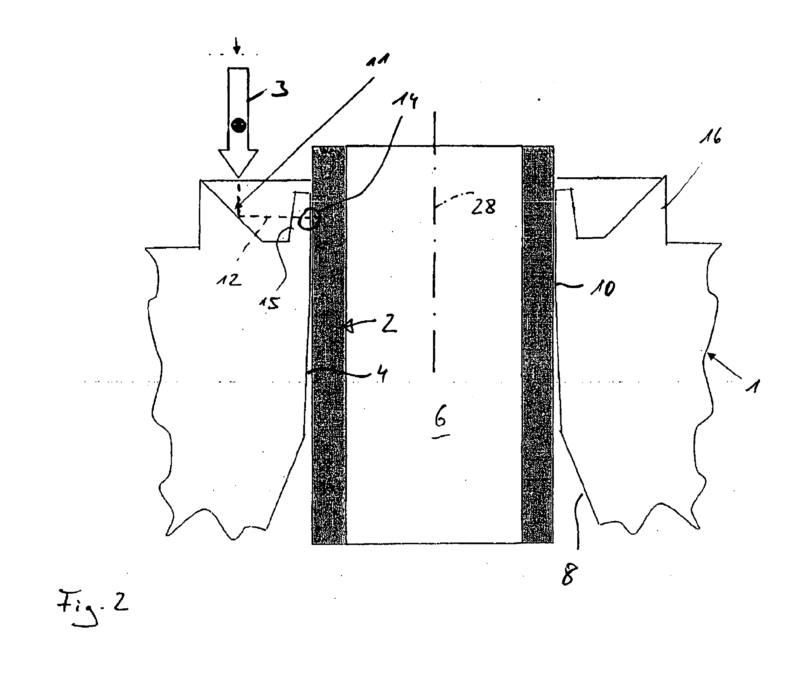

Fig. 2 zeigt eine andere Ausführungsform, bei welcher der Laserstrahl 3 von außen auf die Reflektorfläche 11 trifft und dann durch einen Bereich 15 der Tragplatte 1 hindurchtritt und so bis zur jeweiligen Schweißstelle 14 gelangt. Der genannte Bereich 15 ist hier durch einen Ringkragen gebildet, der beim Herstellen der Schweißnaht aufschmilzt und die Schweißverbindung mit dem Rohr 2 erzeugt. Im Beispiel ist zur Realisierung dieser Reflektorfläche 11 an der Tragplatte 1 ein ringförmiger Reflektorbereich 16 ausgebildet, der die jeweilige Durchgangsöffnung 4 umschließt bzw. einfasst. Das in die Durchgangsöffnung 4 eingesteckte Rohr 2 durchsetzt den Reflektorbereich 16 und liegt am Kragen 15 an. Der Reflektorbereich 16 weist an einem dem Rohr 2 zugewandten Seite die Reflektorfläche 11 auf, die insbesondere rotationssymmetrisch bezüglich der Längsmittelachse 28 des Rohrs 2 ausgestaltet ist.

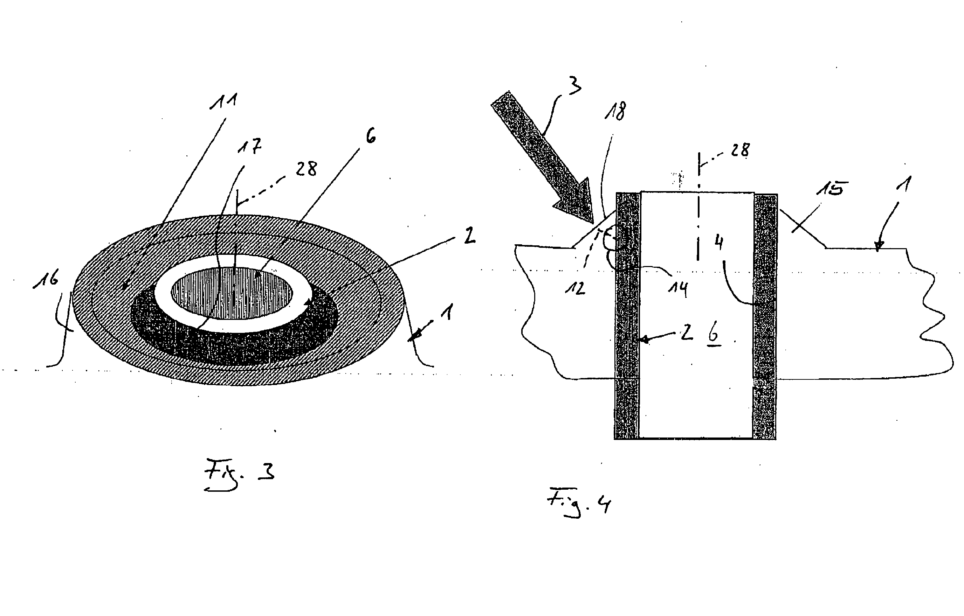

Fig. 3 zeigt perspektivisch die Konfiguration gemäß Fig. 2 nach dem Herstellen einer kreisförmigen Schweißnaht 17, in welcher der Kragen 15 im wesentlichen vollständig aufgegangen ist. Erkennbar sind noch die Reflektorfläche 11 und das über die Schweißnaht 17 mit der Tragplatte 1 verbundene Rohr 2.

Um die Reflexionswirkung der Reflektorflächen 11 verbessern zu können, ist es grundsätzlich möglich, die Reflektorflächen 11 auf geeignete Weise zu verspiegeln. Beispielsweise kann eine Spiegelschicht aufgedampft, auflackiert, aufgespritzt oder aufgalvanisiert werden. Grundsätzlich funktioniert die Reflexion des Laserstrahls 3 an der Reflektorfläche auch mit Totalreflexion, ohne zusätzliche Verspiegelungsmaßnahmen.

Bei der in Fig. 4 gezeigten Variante ist anstelle einer Reflektorfläche 11 zumindest eine Brechungsfläche 18 vorgesehen. Diese ist hier ebenfalls an der Tragplatte 1 ausgebildet und charakterisiert sich dadurch, dass der Laserstrahl 3 an dieser Brechungsfläche 18 von außen in den Werkstoff der Tragplatte 1 eintritt, dabei seine Richtung ändert und dann mit seiner neuen Richtung in der Tragplatte 1 bis zur jeweiligen Schweißstelle 14 gelangt. Durch eine geeignete Auswahl der Neigung der Brechungsfläche 18 sowie durch eine entsprechende Auswahl des Einfallwinkels des Laserstrahls 3 an dieser Brechungsfläche 18 lässt sich der Laserstrahl 3 innerhalb der Tragplatte 1 gezielt zur jeweiligen Schweißstelle 14 führen. Zweckmäßig erstreckt sich auch diese Brechungsfläche 18 rotationssymmetrisch zur Längsmittelachse 28 des Rohrs 2.

Bei den Ausführungsformen der Fig. 1 bis 4 sind die Reflektorflächen 11 bzw. die Brechungsfläche 18 an der Tragplatte 1 jeweils so angeordnet, dass sie jeweils genau einem Rohr 2 zugeordnet sind.

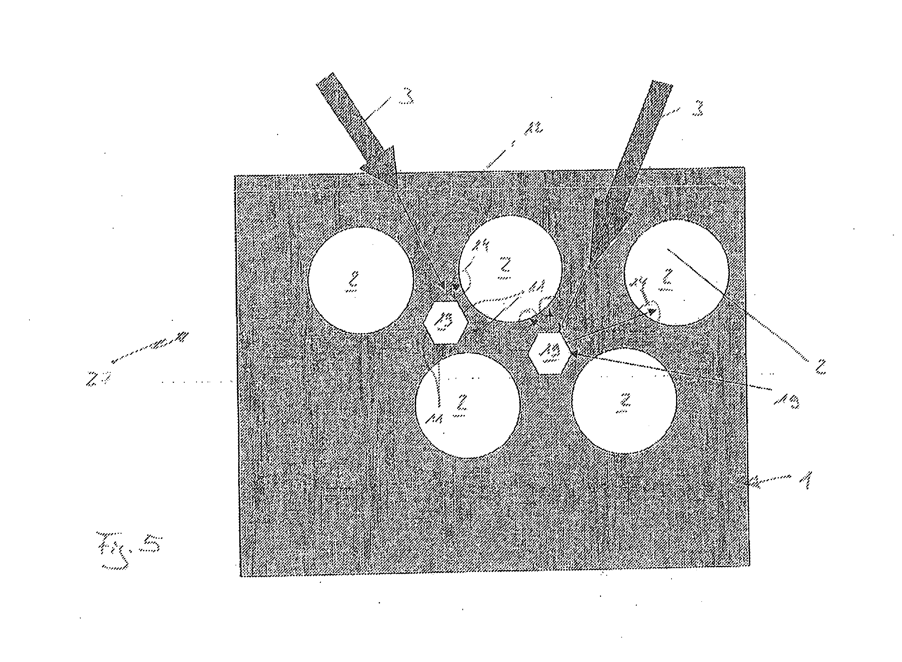

Die Fig. 5 bis 9 beschreiben nun Ausführungsformen, bei denen ein Reflektor 19 verwendet wird, mit dessen Hilfe mehrere unterschiedliche Schweißstellen 14 erreicht werden können, die außerdem an unterschiedlichen Rohren 2 angeordnet sein können. Entsprechend Fig. 5 sind in dem gezeigten Ausschnitt eines Wärmeübertragers 27 kein Komma fünf Rohre 2 vereinfacht wiedergegeben. Des Weiteren sind an der Tragplatte 1 zwei Reflektoren 19 vorgesehen. Die Laserstrahlen 3 können seitlich, also gegenüber einer Normalenrichtung parallel zur Längsmittelachse 28 der Rohre 2 geneigt zu den Reflektoren 19 gelangen. Durch Ändern der Einfallwinkel sowie durch Anstrahlen unterschiedlicher Reflektorflächen 11 an den Reflektoren 19 lassen sich eine Vielzahl unterschiedlicher Schweißstellen 14 an mehreren Rohren 2 erreichen, was die Herstellung der gewünschten Schweißverbindungen auch bei beengten Raumverhältnissen ermöglicht.

Bei der in Fig. 5 gezeigten Ausführungsform weist der jeweilige Reflektor 19 beispielsweise eine Wabenstruktur auf und besitzt dementsprechend sechs außen liegende Reflektorflächen 11, über die eine Vielzahl unterschiedlicher Schweißstellen 14 erreichbar sind. Die Reflektorflächen 11 können sich dabei jeweils senkrecht zur Ebene der Tragplatte 1 erstrecken.

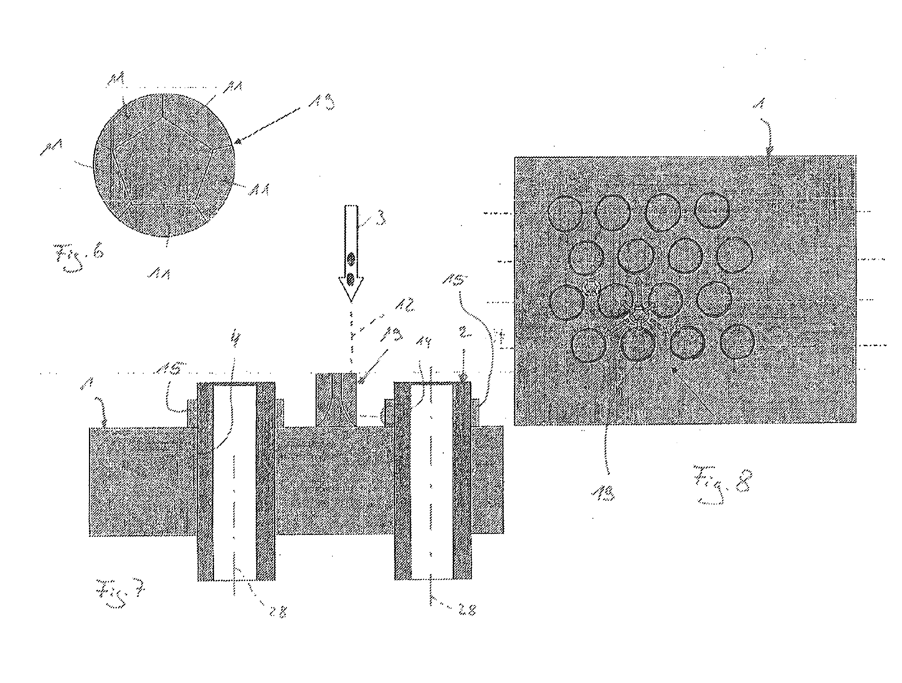

Im Unterschied dazu zeigt Fig. 6 eine vergrößerte Darstellung eines prismatischen Reflektors 19, der fünf abgeschrägte Reflektorflächen 11 aufweist. Entsprechend Fig. 7 kann bei einem derartigen Reflektor 19 der Laserstrahl 3 grundsätzlich senkrecht zur Tragplatte 1 auf den Reflektor 19 auftreffen. Die jeweilige Reflektorfläche 11 bewirkt dann die gewünschte Umlenkung in Richtung der jeweiligen Schweißstelle 14. Im Beispiel ist die Tragplatte 1 im Bereich jeder Durchgangsöffnung 4 wieder mit einem Kragen 15 ausgestattet. Der Kragen 15 kann dabei integraler Bestandteil der Tragplatte 1 ein. Grundsätzlich ist es ebenso möglich, den Kragen 15 als separates Bauteil anzubringen. Zumindest im Bereich dieses Kragens 15 ist die Tragplatte 1 für das Licht des Laserstrahls 3 durchlässig. Der Kragen 15 schmilzt beim Herstellen der Schweißnaht mehr oder weniger auf und realisiert die gewünschte Anbindung zwischen Rohr 2 und Tragplatte 1.

Entsprechend Fig. 8 lassen sich über den jeweiligen Reflektor 19 mehrere Schweißstellen 14 und insbesondere mehrere Rohre 2 erreichen, um diese mit der Tragplatte 1 zu verschweißen. Es ist klar, dass zum Ausbilden durchgängiger unterbrechungsfreier Schweißnähte Relativbewegungen erforderlich sind. Hierzu kann der Laserstrahl 3 relativ zur Tragplatte 1 bewegt werden. Gemäß Fig. 8 können mehrere derartige Reflektoren 19 vorgesehen sein, um eine Vielzahl von Rohren 2 mit der Tragplatte 1 zu verschweißen.

Die Reflektoren 19 können grundsätzlich integrale Bestandteile der Tragplatte 1 sein. Des Weiteren ist es ebenso möglich, die Reflektoren 19 separat von der jeweiligen Tragplatte 1 herzustellen und diese dann an der jeweiligen Tragplatte 1 anzubringen. Dabei können die Reflektoren 1 dauerhaft an der Tragplatte 1 angebracht werden. Ebenso ist es möglich, die Reflektoren 19 nur vorübergehend, nämlich insbesondere nur für den Schweißvorgang an der Tragplatte 1 anzubringen.

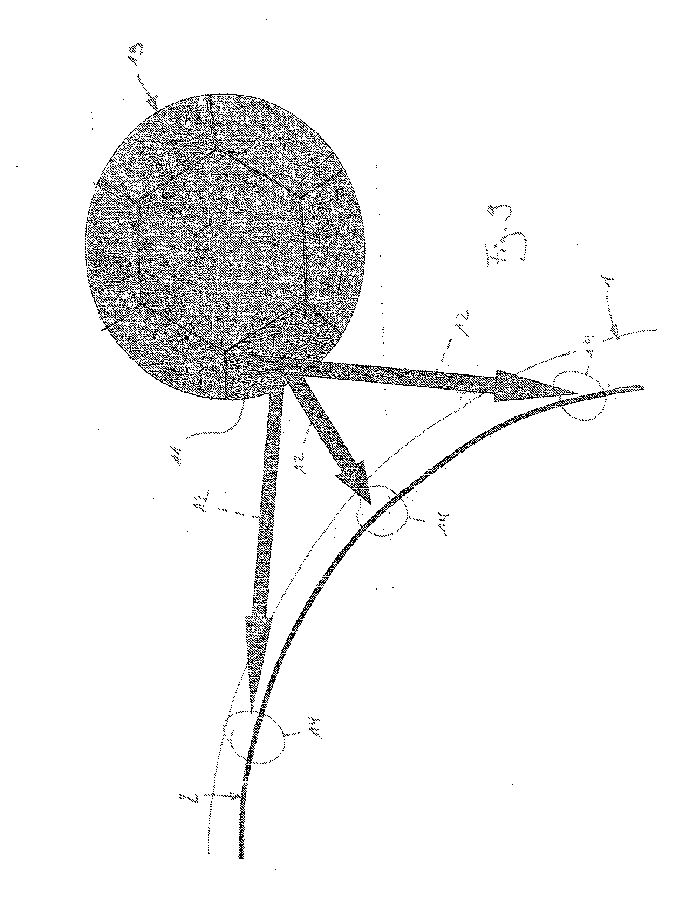

Fig. 9 veranschaulicht, dass es durch Ändern des Einfallswinkels, mit dem der Laserstrahl 3 auf die jeweilige Reflektorfläche 11 trifft, möglich ist, unterschiedliche Schweißstellen 14 mit dem Laserstrahl 3 zu erreichen. Erkennbar verändert sich dabei gleichzeitig auch die Weglänge im Verlauf 12 des jeweiligen Laserstrahls 3. Ebenso verändert sich der Einfallwinkel, mit dem der jeweilige Laserstrahl 3 letztlich innerhalb der jeweiligen Schweißstelle 14 auf den absorbierenden Werkstoff des Rohrs 2 trifft. Hierdurch kann sich die Absorptionswirkung und somit die Wärmeentwicklung innerhalb der unterschiedlichen Schweißstellen 14 verschieden darstellen. Um eine gleichförmige Schweißnaht entlang des Umfangs des jeweiligen Rohrs 2 erzielen zu können, ist es nun möglich, das Schweißverfahren so durchzuführen, dass der Laserstrahl 3 hinsichtlich seiner Leistung an den Lichtweg und/oder an den Strahlwinkel angepasst werden kann. Beispielsweise lässt sich die Leistung des Laserstrahls durch die Pulsfrequenz sowie durch die Amplitude einstellen. Die Schweißparameter, die sich dadurch einstellen lassen, sind bevorzugt die Schweißtemperatur und auch die Einwirkzeit des Laserstrahls 3 an der jeweiligen Schweißstelle 14.

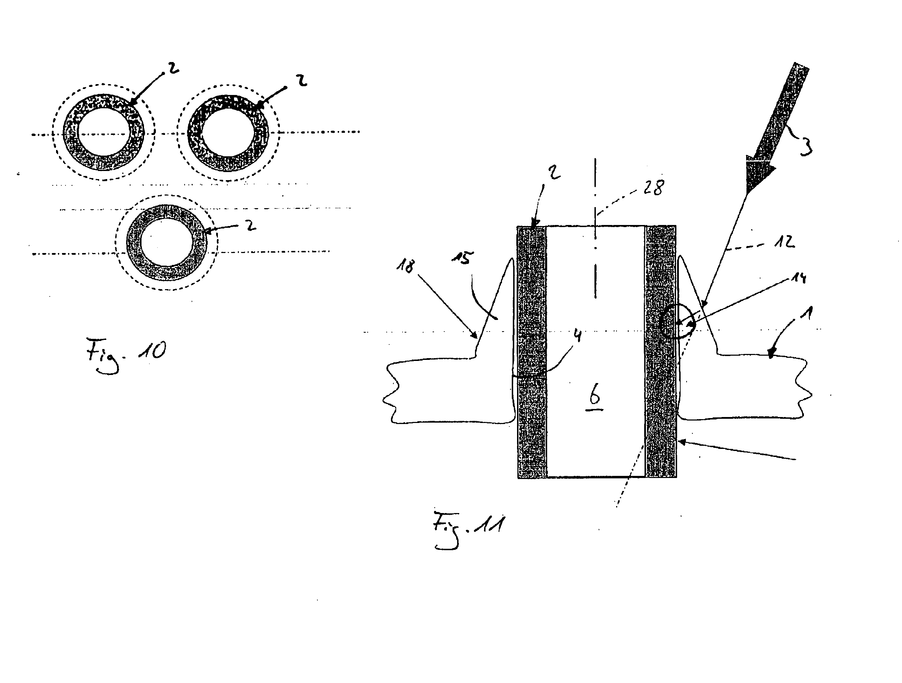

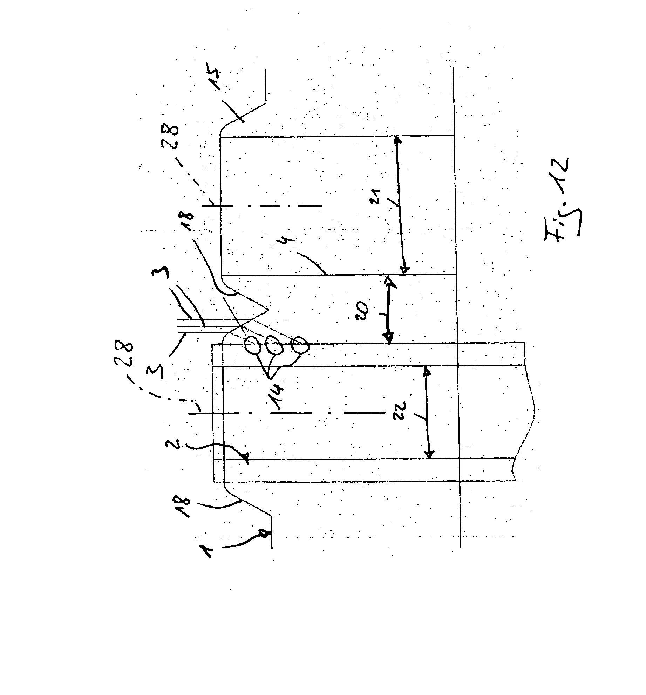

Die Fig. 10 und 11 sowie 12 zeigen nochmals Ausführungsformen, bei denen an der Tragplatte 1 für das jeweilige Rohr 12 eine Brechungsfläche 18 ausgebildet ist. Entsprechend der in Fig. 10 gezeigten Konfiguration können die einzelnen benachbarten Rohre 2 relativ dicht beieinander positioniert werden, wodurch sich eine kompakte Bauform realisieren lässt. Gemäß den Fig. 11 und 12 kann der Laserstrahl 3 mit einem relativ großen Winkel bezüglich der Ebene der Tragplatte 1 zugeführt werden. Bei der in Fig. 12 gezeigten Ausführungsform ist der Laserstrahl 3 im wesentlichen senkrecht zur Ebene der Tragplatte 1, also parallel zur Längsmittelachse 28 des Rohrs 2, orientiert. Bei Auftreffen auf die rotationssymmetrische und konische oder kegelförmige Brechungsfläche 18 dringt der Laserstrahl 3 entlang seines Verlaufs 12 in den Werkstoff der Tragplatte 1 ein, und zwar in den Kragen 15, der zur Ausbildung der Brechungsfläche 18 an der Tragplatte 1 vorgesehen ist und der die jeweilige Durchgangsöffnung 4 einfasst. Beim Medienübergang an der Brechungsfläche 18 erfolgt die gewünschte Brechung des Laserstrahls 3, wodurch sich dessen Ausbreitungsrichtung verändert. Im gezeigten Beispiel wird der Laserstrahl 3 in Richtung zum Rohr 2 hin gebrochen bzw. abgelenkt. Im Werkstoff des Kragens 15 bzw. in der Tragplatte 1 breitet sich der Laserstrahl 3 dann bis zur jeweiligen Schweißstelle 14 aus.

Entsprechend Fig. 12 lassen sich die Positionen des Laserstrahls 3 entlang der Brechungsfläche 18 variieren, wodurch eine Tiefenwirkung für die zu erzeugende Schweißnaht realisierbar ist. Beispielsweise kann eine in axialer Richtung des Rohrs 2 vergleichsweise breite Schweißnaht realisiert werden. In Fig. 12 sind rein exemplarisch drei in radialer Richtung unterschiedliche Positionen für den Laserstrahl 3 wiedergegeben, wodurch drei Schweißstellen 14 erreichbar sind, die an ihren Grenzen fließend ineinander übergehen können.

Erkennbar ist in Fig. 12 außerdem, dass benachbarte Rohre 2 extrem nahe aneinander angeordnet sein können. Beispielsweise beträgt ihr Abstand 20 weniger als ihr Außendurchmesser 21 oder weniger als ihr Innendurchmesser 22.

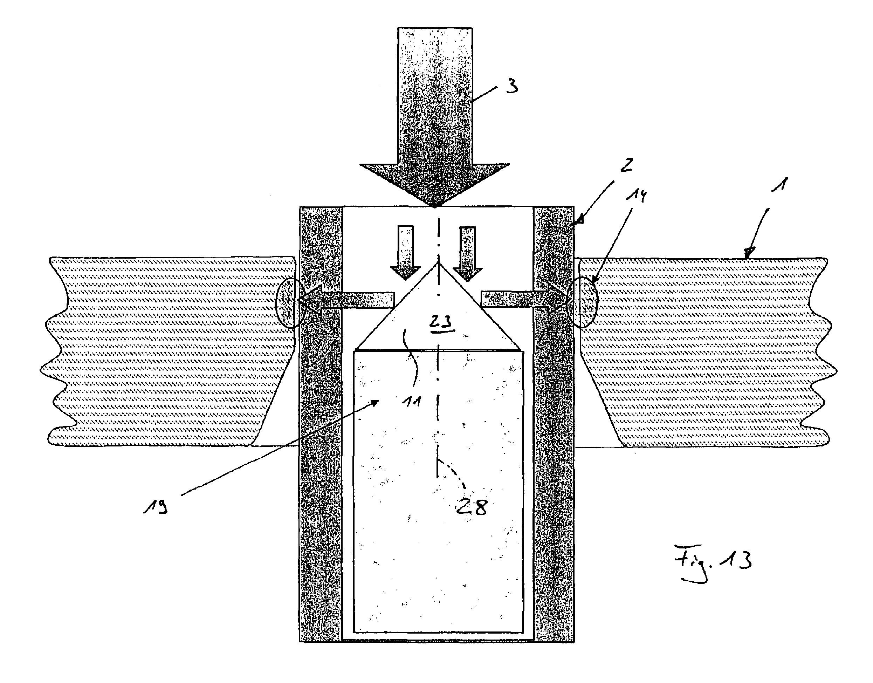

Während bei den bislang vorgestellten Ausführungsformen die Reflektorflächen 11 zumindest während des Schweißverfahrens unmittelbar an der Tragplatte 1 vorhanden waren, zeigt Fig. 13 nun eine Ausführungsform, bei welcher wieder ein Reflektor 19 verwendet wird, der jedoch keinen Bestandteil der Tragplatte 1 bildet. Vielmehr ist der Reflektor 19 hier eher dem Rohr 2 zugeordnet. Dabei bildet der Reflektor 19 ein separates Bauteil, das für den Schweißvorgang in das Rohr 2 eingebracht ist. Bei dieser Ausführungsform ist das Rohr 2 für den Laserstrahl 3 mit erhöhter Durchlässigkeit ausgestaltet, während die Tragplatte 1 für den Laserstrahl 3 absorbierend ausgestaltet ist. Der Reflektor 19 ist hier stiftförmig ausgestaltet und trägt einen Reflektorkopf 23, an dem mehrere Reflektorflächen 11 ausgestaltet sein können. Der Laserstrahl 3 kann dann die einzelnen Reflektorflächen 11 anfahren und mit unterschiedlichen Winkeln so beaufschlagen, dass sich letztlich eine ringförmig geschlossene Schweißnaht zwischen Trägerplatte 1 und Rohr 2 ausbilden kann. Ebenso ist es grundsätzlich möglich, mit nur einer einzigen Reflektorfläche 11 am Reflektorkopf 23 zu arbeiten, wobei dann der Reflektor 19 drehend antreibbar ist, wodurch bei einer entsprechenden Konfiguration ein ringförmiger Verlauf für den an sich stationären Laserstrahl 3 realisierbar ist, um so die gewünschte ringförmig geschlossene Schweißnaht herzustellen. Beispielsweise lässt sich der Reflektorkopf 23 dadurch realisieren, dass der stiftförmige zylindrische Körper des Reflektors 19 bezüglich seiner Längsrichtung unter einem Winkel von etwa 45° geschnitten wird. Hierdurch entsteht eine Reflektorfläche 11, die bei axialer Beaufschlagung mit dem Laserstrahl 3 einen im wesentlichen radial abgelenkten Verlauf 12 für den Laserstrahl 3 erzeugen kann. Durch Drehen des Reflektors 19 um koaxial zur Längsmittelachse 28 des Rohrs 2 bewegt sich der Verlauf bzw. die Auftreffstelle des Laserstrahls 3 auf die Tragplatte 1 im Kreis und bildet einen geschlossenen Ring.

Bei der in Fig. 14 gezeigten Ausführungsform sind die beiden Kunststoffteile, also die Tragplatte 1 und das Rohr 2 halb absorbierend ausgestaltet. Das bedeutet, dass jedes dieser Kunststoffteile 1, 2 zumindest eine gewisse Absorptionsfähigkeit für den Laserstrahl 3 aufweist. Dabei ist zumindest die Tragplatte 1 nicht vollständig absorbierend, sondern weist zumindest eine teilweise Durchlässigkeit für den Laserstrahl 3 auf. Die beiden Bauteile 1, 2 werden für die Durchführung des Schweißverfahrens relativ zueinander so positioniert, dass zwischen ihnen, also zwischen der Tragplatte 1 und dem Rohr 2, wieder ein Spalt 10 entsteht (vergleiche Fig. 1). Dieser Spalt 10 besitzt jedoch eine vorbestimmte Spaltweite 24, die bezüglich der Längsmittelachse 28 des Rohrs 2 radial zu messen ist. Der Laserstrahl 3 wird nun parallel zu einer sich quer zur Spaltweite 24 erstreckenden Erstreckungsrichtung 25 des Spalts 10 in den Spalt 10 eingestrahlt. Die genannte Spalterstreckungsrichtung 25 ist in Fig. 14 durch einen Doppelpfeil angedeutet und erstreckt sich parallel zur Längsmittelachse 28 des Rohrs 2. Der Laserstrahl 3 wird somit parallel zur Längsmittelachse 28 des Rohrs 2 in den Spalt 10 eingestrahlt. Damit nun die gewunschte Schweißverbindung zwischen dem Rohr 2 und der Trägerplatte 1 entstehen kann, sind die Spaltweite 24 und der Laserstrahl 3 gezielt aufeinander abgestimmt. Insbesondere ist die Spaltweite 24 etwa gleich groß wie ein nicht näher bezeichneter Durchmesser des Laserstrahls 3. Insbesondere ist die Spaltweite 24 maximal 10mal größer als der Durchmesser des Laserstrahls 3. In Verbindung mit den halbabsorbierenden Materialien sowohl der Trägerplatte 1 als auch des Rohrs 2 kommt es zur gewünschten Aufheizung der sich im Spalt 10 gegenüberliegenden Wandabschnitte einerseits des Rohrs 2 und andererseits der Trägerplatte 1. Hierdurch schmelzen die Wandabschnitte oberflächlich auf und können miteinander verschmelzen, um die in Fig. 14 angedeutete Schweißverbindung 26 herzustellen.

Bei der in Fig. 14 gezeigten Ausführungsform ist wieder ein Bund 9 vorgesehen, gegen den das Rohr 2 axial zur Anlage gebracht werden kann, wenn es in die Durchgangsöffnung 4 der Tragplatte 1 axial eingesteckt ist. Insoweit verdeckt der Bund 9, also ein Bestandteil der Trägerplatte 1, den Spalt 10 bezüglich einer vom Rohr 2 abgewandten Oberseite 13 oder Außenseite 13 der Tragplatte 1. Bemerkenswert ist nun, dass der Laserstrahl 3 durch diesen Bereich (Bund 19) der Tragplatte 1 hindurch in den Spalt 10 eingestrahlt werden kann. Ermöglicht wird dies durch die semiabsorbierende bzw. semitransparente Eigenschaft des für die Tragplatte 1 gewählten Materials.

## Patentansprüche

1. Verfahren zum Herstellen eines Kunststoff-Wärmeübertragers, bei dem Rohre (2) aus Kunststoff an ihren Enden jeweils mit einer Tragplatte (1) aus Kunststoff lasergeschweißt werden,
- wobei die jeweilige Tragplatte (1) zumindest bereichsweise für einen beim Laserschweißen verwendeten Laserstrahl (3) eine relativ hohe Durchlässigkeit aufweist,
- wobei das jeweilige Rohr (2) zumindest bereichsweise für den beim Laserschweißen verwendeten Laserstrahl (3) eine relativ niedrige Durchlässigkeit aufweist,
- wobei der Laserstrahl (3) beim Laserschweißen durch Brechung und/oder Reflexion zur jeweiligen Schweißstelle (14) gelangt.

2. Verfahren nach Anspruch 1,
**dadurch gekennzeichnet,**
**dass** an oder in der Tragplatte (1) wenigstens eine Reflektorfläche (11) ausgebildet ist, die den Laserstrahl (3) durch Reflexion zur jeweiligen Schweißstelle (14) umlenkt.

3. Verfahren nach Anspruch 2,
**dadurch gekennzeichnet,**
**dass** der Laserstrahl (3) von außen auf die Reflektorfläche (11) trifft und durch einen Bereich (15) der Tragplatte (1) hindurch zur jeweiligen Schweißstelle (14) gelangt.

4. Verfahren nach Anspruch 2,
**dadurch gekennzeichnet,**
**dass** der Laserstrahl (3) von innen auf die Reflektorfläche (11) trifft und innerhalb der Tragplatte (1) zur jeweiligen Schweißstelle (14) gelangt.

5. Verfahren nach einem der Ansprüche 2 bis 4,
**dadurch gekennzeichnet,**
**dass** die jeweilige Reflektorfläche (11) verspiegelt ist und/oder mit Totalreflexion arbeitet.

6. Verfahren nach Anspruch 1,
**dadurch gekennzeichnet,**
**dass** an oder in der Tragplatte (1) wenigstens eine Brechungsfläche (18) ausgebildet ist, wobei der von außen auf die Brechungsfläche (18) auftreffende Laserstrahl (3) an der Brechungsfläche (18) in die Tragplatte (1) eintritt und innerhalb der Tragplatte (1) zur jeweiligen Schweißstelle (14) gelangt.

7. Verfahren nach Anspruch 1,
**dadurch gekennzeichnet,**
**dass** ein Reflektor (19) verwendet wird, um den Laserstrahl (3) nacheinander mehreren verschiedenen Schweißstellen (14) zwischen gleichen oder verschiedenen Bauteilen zuzuführen.

8. Verfahren nach Anspruch 7,
**dadurch gekennzeichnet,**
**dass** der Reflektor (19) mehrere Reflektorflächen (11) aufweist, die verschiedenen Schweißstellen (14) zugeordnet sind.

9. Verfahren nach Anspruch 7 oder 8,
**dadurch gekennzeichnet,**
**dass** der Reflektor (19) an der Tragplatte (1) integral ausgebildet ist.

10. Verfahren nach Anspruch 7 oder 8,
**dadurch gekennzeichnet,**
**dass** der Reflektor (19) an die Tragplatte (1) bleibend angebaut ist.

11. Verfahren nach Anspruch 7 oder 8,
**dadurch gekennzeichnet,**
**dass** der Reflektor (19) nur für den Schweißvorgang relativ zur Tragplatte (1) positioniert ist.

12. Verfahren nach einem der Ansprüche 1 bis 11,
**dadurch gekennzeichnet,**
**dass** der Laserstrahl (3) hinsichtlich seiner Leistung, insbesondere hinsichtlich seiner Pulsfrequenz und Amplitude, an den Lichtweg von der jeweiligen Reflektorfläche (11) bzw. Brechungsfläche (18) zur jeweiligen Schweißstelle (14) und/oder an den Strahlwinkel an der Reflektorfläche (11) und/oder Brechungsfläche (18) angepasst wird, derart, dass an den verschiedenen Schweißstellen (14) etwa gleiche Schweißparameter, insbesondere Temperatur und Einwirkzeit, vorliegen.

## Claims

1. A method for producing a plastic heat exchanger, in which pipes (2) consisting of plastic are each laser-welded at their ends to a support plate (1) consisting of plastic,
- wherein the respective support plate (1) has a relatively high permeability to a laser beam (3) used during the laser welding, at least in some regions,
- wherein the respective pipe (2) has a relatively low permeability to the laser beam (3) used during the laser welding, at least in some regions,
- wherein the laser beam (3) reaches the respective weld point (14) during the laser welding by refraction and/or reflection.

2. The method according to Claim 1,
**characterised in that**
at least one reflector surface (11) is formed on or in the support plate (1), which reflector surface deflects the laser beam (3) by reflection to the respective weld point (14).

3. The method according to Claim 2,
**characterised in that**
the laser beam (3) falls onto the reflector surface (11) from the outside and passes through a region (15) of the support plate (1) to the respective weld point (14).

4. The method according to Claim 2,
**characterised in that**
the laser beam (3) falls onto the reflector surface (11) from the inside and reaches the respective weld point (14) inside the support plate (1).

5. The method according to one of Claims 2 to 4,
**characterised in that**
the respective reflector surface (11) is metal-coated and/or operates with total reflection.

6. The method according to Claim 1,
**characterised in that**
at least one refraction surface (18) is formed on or in the support plate (1), wherein the laser beam (3) which falls on the refraction surface (18) from the outside enters the support plate (1) at the refraction surface (18) and reaches the respective weld point (14) inside the support plate (1).

7. The method according to Claim 1,
**characterised in that**
a reflector (19) is used to guide the laser beam (3) to a plurality of successive different weld points (14) between identical or different components.

8. The method according to Claim 7,
**characterised in that**
the reflector (19) has a plurality of reflector surfaces (11) which are assigned to different weld points (14).

9. The method according to Claim 7 or 8,
**characterised in that**
the reflector (19) is formed integrally on the support plate (1).

10. The method according to Claim 7 or 8,
**characterised in that**
the reflector (19) is permanently attached to the support plate (1).

11. The method according to Claim 7 or 8,
**characterised in that**
the reflector (19) is positioned relative to the support plate (1) only for the welding process.

12. The method according to one of Claims 1 to 11,
**characterised in that**
the laser beam (3) is adapted in terms of its power, in particular in terms of its pulse frequency and amplitude, to the beam path from the respective reflector surface (11) or refraction surface (18) to the respective weld point (14) and/or to the beam angle at the reflector surface (11) and/or refraction surface (18) in such a manner that approximately the same welding parameters, in particular temperature and exposure time, are present at the different weld points (14).

## Revendications

1. Procédé de fabrication d'un échangeur thermique en plastique, dans lequel des tuyaux (2) en plastique sont soudés au laser à leurs extrémités respectivement avec une plaque de support (1) en plastique,
- dans lequel la plaque de support respective (1) présente au moins sur des portions une perméabilité relativement élevée à un faisceau laser (3) employé lors de la soudure au laser,
- dans lequel le tuyau respectif (2) présente au moins sur des portions une perméabilité relativement basse au faisceau laser (3) employé lors de la soudure au laser,
- dans lequel le faisceau laser (3) parvient lors de la soudure au laser par réfraction et/ou réflexion vers le point de soudure (14) respectif.

2. Procédé selon la revendication 1,
**caractérisé en ce que**
sur ou dans la plaque de support (1) au moins une surface de réflecteur (11) est réalisée, laquelle dévie le faisceau laser (3) par réflexion vers le point de soudure (14) respectif.

3. Procédé selon la revendication 2,
**caractérisé en ce que**
le faisceau laser (3) bute depuis l'extérieur sur la surface de réflecteur (11) et parvient à travers une zone (15) de la plaque de support (1) jusqu'au point de soudure (14) respectif.

4. Procédé selon la revendication 2,
**caractérisé en ce que**
le faisceau laser (3) bute depuis l'intérieur sur la surface de réflecteur (11) et parvient à l'intérieur de la plaque de support (1) jusqu'au point de soudure respectif (14).

5. Procédé selon une des revendications 2 à 4,
**caractérisé en ce que**
la surface de réflecteur respective (11) est reflétée et/ou fonctionne avec réflexion totale.

6. Procédé selon la revendication 1,
**caractérisé en ce que**
sur ou dans la plaque de support (1) au moins un plan de réfraction (18) est réalisé, dans lequel le faisceau laser (3) incident depuis l'extérieur sur le plan de réfraction (18) entre sur le plan de réfraction (18) dans la plaque de support (1) et parvient à l'intérieur de la plaque de support (1) jusqu'au point de soudure respectif (14).

7. Procédé selon la revendication 1,
**caractérisé en ce que**
un réflecteur (19) est employé, afin d'introduire le faisceau laser (3) à plusieurs points de soudure (14) différents se succédant entre des composants identiques ou différents.

8. Procédé selon la revendication 7,
**caractérisé en ce que**
le réflecteur (19) présente plusieurs surfaces de réflecteur (11), qui sont coordonnées à des points de soudure (14) différents.

9. Procédé selon les revendications 7 ou 8,
**caractérisé en ce que**
le réflecteur (19) est formé en un seul tenant sur la plaque de support (1).

10. Procédé selon les revendications 7 ou 8,
**caractérisé en ce que**
le réflecteur (19) est monté de manière permanente sur la plaque de support (1).

11. Procédé selon les revendications 7 ou 8,
**caractérisé en ce que**
le réflecteur (19) est positionné relativement à la plaque de support (1) seulement pour le processus de soudure.

12. Procédé selon une des revendications 1 à 11,
**caractérisé en ce que**
le faisceau laser (3) est adapté en ce qui concerne sa puissance, notamment en ce qui concerne sa fréquence d'impulsion et son amplitude, au trajet de la lumière depuis la surface de réflecteur respective (11) ou le plan de réfraction (18) jusqu'au point de soudure respectif (14) et/ou à l'angle de faisceau sur la surface de réflecteur (11) et/ou le plan de réfraction (18) de telle sorte que des paramètres de soudure approximativement identiques, notamment la température et la durée d'action, soient présents à différents points de soudure (14).
